# EUROPÄISCHE PATENTSCHRIFT

(11) **EP 1 811 277 B1**
(45) Veröffentlichungstag und Bekanntmachung des Hinweises auf die Patenterteilung: **14.03.2018**
(21) Anmeldenummer: 07000385.0
(22) Anmeldetag: 10.01.2007
(51) Int. Cl.: G01K 5/48, G05D 23/02

(54) **Verfahren zum Herstellen eines thermostatischen Arbeitselementes und thermostatisches Arbeitselement**
Method for producing a thermostatic work element and thermostatic work element
Procédé de fabrication d'un actionneur thermostatique et actionneur thermostatique

(30) Priorität: 19.01.2006 DE 102006003258
(43) Veröffentlichungstag der Anmeldung: 25.07.2007
(73) Patentinhaber: MAHLE Behr Kornwestheim GmbH, 70806 Kornwestheim (DE)
(72) Erfinder: Willers, Eike, Dr.-Ing., 70469 Stuttgart (DE); Buschatz, Immanuel, Dipl.-Ing., 72669 Unterensingen (DE); Auweder, Andreas, 71665 Vaihingen/Enz (DE)
(74) Vertreter: Grauel, Andreas

(56) Entgegenhaltungen:
- EP-A- 1 566 811
- EP-A1- 0 139 586
- FR-A- 2 771 471
- US-A- 5 052 181
- SHIGANOV I N ET AL: "Special features of laser welding AD37 aluminium alloy strengthened by heat treatment" WELDING INTERNATIONAL, WOODHEAD PUBLISHING, CA, Bd. 18, Nr. 5, 1. Mai 2004 (2004-05-01), Seiten 405-409, XP019384981 ISSN: 1573-9449

## Beschreibung

Die Erfindung betrifft ein Verfahren zum Herstellen eines thermostatischen Arbeitselementes, das ein Gehäuse aufweist, in welches ein Dehnstoff eingefüllt wird und dessen offene Seite mit einem Führungsteil verschlossen wird, das eine Führungsbohrung für einen in das Gehäuse eintauchenden Arbeitskolben aufweist, und ein thermostatisches Arbeitselement.

Bei derartigen thermostatischen Arbeitselementen wird das Führungsteil in das offene Ende des Gehäuses eingesteckt und mittels einer Bördelung gesichert. Um diese Bördelung anbringen zu können, ist das Gehäuse des thermostatischen Arbeitselementes auf seiner Außenseite mit einer Ringschulter versehen, an der es beim Bördeln gehalten wird. Diese Ringschulter ist bei einigen Anwendungsfällen von Vorteil, da sie beispielsweise zum Abstützen eines Ventiltellers benutzt werden kann. Bei manchen Anwendungen stört jedoch diese Ringschulter, da sie den zur Verfügung stehenden Bauraum einschränkt und / oder zu ungünstigen Strömungsverhältnissen führt. Für das Anbringen der Bördelung sind für jede Bauform eigene Werkzeuge erforderlich, d.h. ein eigener Schließkopf. Das schränkt die konstruktive Freiheit ein, da nicht jede Größe realisiert wird, oder es erhöht die Kosten.

Aus der EP 1 566 811 A1 ist es bekannt, in das Gehäuse eines thermostatischen Arbeitselementes ein Führungsteil aus Kunststoff einzusetzen. Das Führungsteil ist bei dem Ausführungsbeispiel nach Fig. 5 gegenüber dem offenen Ende des Gehäuses mit einem topfartig geformten Teil gesichert, das mit seinem zylindrischen Mantelteil in das Gehäuse eingesteckt ist. Das topfartige Teil wird in einer justierten Position mittels Schweißens mit dem Gehäuse verbunden.

Der Erfindung liegt die Aufgabe zugrunde, ein Verfahren zum Herstellen eines thermostatischen Arbeitselementes zu schaffen, das größere konstruktive Freiheiten erlaubt.

Diese Aufgabe wird dadurch gelöst, dass das Gehäuse mit dem Führungsteil mittels Laserschweißen mit einer umlaufenden Schweißnaht dichtend verschweißt wird.

Bei dieser Lösung wird auf die Bördelverbindung verzichtet, so dass die sich daraus bisher ergebenden Beschränkungen nicht mehr bestehen. Außerdem wird auf ein zusätzliches Dichtungselement verzichtet.

In weiterer Ausgestaltung der Erfindung wird vorgesehen, dass das Gehäuse aus einem Rohrstück gefertigt wird, dessen dem Führungsteil gegenüberliegendes Ende mit einem Boden mittels einer nur eine lokale Erwärmung erfordernden Materialverbindung zwischen Rohrstück und Boden dichtend verschlossen wird. Auf diese Weise lässt sich die Herstellung des Gehäuses vereinfachen, insbesondere da keine Spezialwerkzeuge benötigt werden.

In weiterer Ausgestaltung der Erfindung wird vorgesehen, dass das Gehäuse, nachdem es mit dem Dehnstoff befüllt und mit dem Führungsteil und dem Arbeitskolben versehen worden ist, einem Medium mit einer erhöhten Temperatur ausgesetzt wird, bei welcher der Arbeitskolben eine vorgegebene Position einnehmen soll, dass dann das Führungsteil so tief in das Gehäuse eingedrückt wird, dass der Arbeitskolben die vorgegebene Position erreicht, und dass in dieser Stellung des Führungsteils das Verschweißen zwischen Gehäuse und Führungsteil hergestellt wird.

Die Aufgabe wird bei einem thermostatischen Arbeitselement mit einem Dehnstoff enthaltenden Gehäuse, dessen offene Seite mit einem Führungsteil verschlossen ist, das eine Führungsbohrung für einen in das Gehäuse eintauchenden Arbeitskolben aufweist, dadurch gelöst, dass das Gehäuse und das Führungsteil mittels einer umlaufenden Laserschweißnaht dichtend verbunden sind.

Weitere Merkmale und Vorteile der Erfindung ergeben sich aus der nachfolgenden Beschreibung der in den Zeichnungen dargestellten Ausführungsformen.
- Fig. 1: zeigt einen Axialschnitt durch ein erfindungsgemäßes thermostatisches Arbeitselement,
- Fig. 2: einen Axialschnitt durch eine weitere Ausführungsform eines erfindungsgemäßen thermostatischen Arbeitselementes und
- Fig. 3: einen axialen Teilschnitt durch eine Ausführungsform ähnlich Fig. 2, bei welcher der Boden eine elektrische Heizeinrichtung enthält.

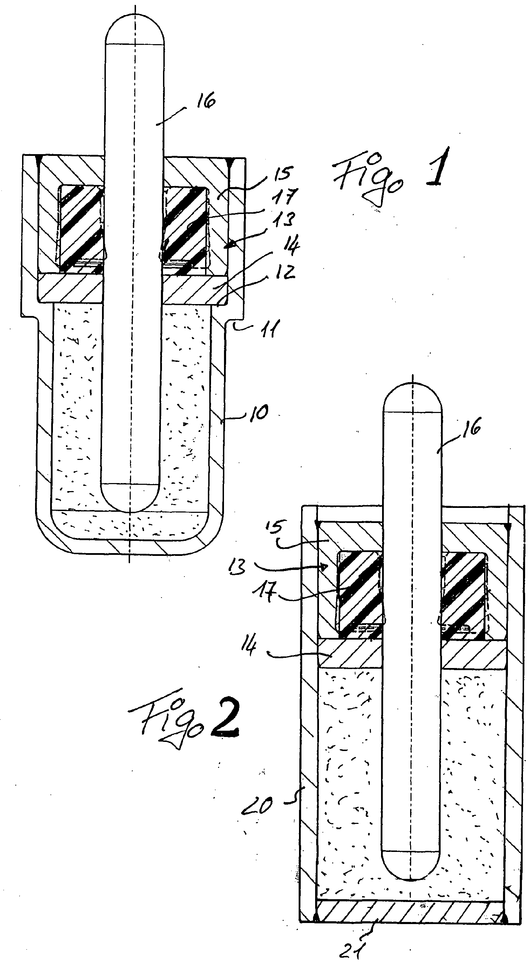

Das in Fig. 1 dargestellte thermostatische Arbeitselement besitzt ein vorzugsweise tiefgezogenes Gehäuse 10 aus Metall, das einen geschlossenen Boden und ein offenes Ende aufweist. In Abstand zu dem offenen Ende ist das Gehäuse 10 mit einem Absatz versehen, der auf der Außenseite und auf der Innenseite eine Ringschulter 11, 12 bildet.

In das offene Ende des Gehäuses 10 ist ein Führungsteil 13 eingesteckt, vorzugsweise eingepresst, das aus einer eine zentrale Bohrung aufweisenden Platte 14 und einem topfartig ausgesparten, ebenfalls eine zentrale Bohrung aufweisenden Teil 15 zusammengesetzt ist. Die zentralen Bohrungen der Platte 14 und des Teils 15 dienen zur Führung eines Arbeitskolbens 16, der in das Gehäuse 10 eintaucht. Das Gehäuse 10 ist mit einem Dehnstoff befüllt, beispielsweise eine Wachsmischung. Die Platte 14 und das Teil 15 nehmen zwischen sich ein ringförmiges Dichtungselement 17 auf, das bei den dargestellten Ausführungsbeispielen ein Elastomerpäckchen ist. Als Dichtungselement 17 können jedoch auch ein Gummieinsatz oder O-Ringe oder ähnliche Dichtungselemente vorgesehen werden, die sich mit einer ausreichenden Dichtungskraft an die Außenfläche des zylindrischen Arbeitskolbens 16 anlegen, jedoch noch eine Bewegung des Arbeitskolbens 16 zulassen.

Nachdem das Gehäuse 10 mit dem Dehnstoff befüllt worden ist und nachdem das Führungsteil 13 mit dem Dichtungselement 17 und dem Arbeitskolben 16 eingesetzt worden ist, werden das Gehäuse 10 und das Teil 15 dichtend miteinander verbunden. Bei dem Ausführungsbeispiel wird vorgesehen, dass zwischen dem offenen Ende des Gehäuses 10 und dem Teil 15 eine umlaufende Schweißnaht angebracht ist, die mittels Laserschweißen hergestellt worden ist. Beispielsweise eignet sich ein YAK-Laser. Bei dem Ausführungsbeispiel ist vorgesehen, dass die Schweißung parallel zur Bewegung des Arbeitskolbens erfolgt. Bei einer abgewandelten Ausführungsform erfolgt das Verschweißen senkrecht hierzu.

Bei dieser Verbindungsart erfolgt nur eine lokale Erwärmung in dem Bereich, in welchem die Materialverbindung hergestellt wird. Eine thermische Schädigung der Dichtungselemente 17 ist somit nicht zu befürchten. Die Gefahr einer thermischen Schädigung der Dichtungselemente lässt sich dadurch noch weiter verringern, dass der Abstand zwischen den Dichtungselementen 17 und der Schweißnaht vergrößert wird, so dass eine relativ starke Wärmeabfuhr erfolgt, bevor die Wärme die Dichtungselemente 17 und / oder den Dehnstoff erreichen kann.

Das in Fig. 1 dargestellte thermostatische Arbeitselement wird in bekannter Weise kalibriert. Es wird einer Temperatur ausgesetzt, beispielsweise in einem beheizten Wasser- oder Ölbad, bei welcher der Arbeitskolben 16 bis zu einer bestimmten Position aus dem Gehäuse 10 und dem Führungsteil 13 ausfahren soll. Um den Arbeitskolben 16 in diese vorgegebene Position zu bringen, werden an dem Gehäuse 10 im Bereich des Dehnstoffes Einprägungen vorgenommen, bis der Arbeitskolben 16 die vorgegebene Position erreicht hat.

Das thermostatische Arbeitselement nach Fig. 2 besitzt ein Gehäuse 20, das aus einem Rohrstück gebildet ist. Dieses Rohrstück ist auf der einen Seite mit einem Boden 21 verschlossen, der beispielsweise mittels Laserschweißen mit dem Ende des Rohrstückes verschweißt ist. Auch andere Arten von Materialverbindungen sind ohne weiteres möglich. In das Gehäuse 20 ist ein Dehnstoff, beispielsweise eine Wachsmischung, eingefüllt. Dann ist in das Gehäuse 20 ein Führungsteil 13 eingepresst worden, das bei dem Ausführungsbeispiel aus einer Platte 14 und einem Teil 15 besteht, die jeweils eine zentrale Bohrung aufweisen und die ein Dichtungselement 17 zwischen sich aufnehmen. Das Dichtungselement 17 dient zum Abdichten des Arbeitskolbens 16, der in das Gehäuse 20 eintaucht.

Bei der Ausführungsform nach Fig. 2 wird vorgesehen, dass das Arbeitselement soweit vorgefertigt worden ist, wie es bisher beschrieben worden ist. In dieser Form, bei der noch keine Materialverbindung zwischen dem Teil 15 und dem Gehäuse 20 vorgesehen ist, wird es einer Temperatur ausgesetzt, bei welcher der Arbeitskolben 16 eine vorbestimmte Position einnehmen soll. Dann wird das Führungsteil 13 weiter in das Gehäuse 20 hineingedrückt, bis der Arbeitskolben 16 tatsächlich die Position erreicht hat, auf welche das thermostatische Arbeitselement kalibriert werden soll. In dieser Stellung des Teils 15 erfolgt die Materialverbindung zwischen dem Gehäuse 20 und dem Teil 15 des Führungsteils 13 durch Laserschweißen. Das thermostatische Arbeitselement ist in dieser Weise kalibriert, ohne dass das Gehäuse 20 durch Prägungen deformiert worden ist. Bei dieser Art der Kalibrierung ist es unter Umständen zweckmäßig, ein einteiliges Führungsteil 13 vorzusehen oder eine fest Verbindung zwischen der Platte 14 und dem Teil 15 vorzusehen, nachdem das Dichtungselement 17 eingesetzt worden ist.

In gleicher Weise ist es möglich, ein Kalibrieren in der Weise durchzuführen, dass das Führungsteil 13 zuerst mittels einer Laserschweißnaht fest mit dem Gehäuse 20 verbunden wird, während für das Kalibrieren der Boden 21 in das Gehäuse 20 eingepresst wird, bis der Arbeitskolben seine durch die Temperatur vorgegebene Position erreicht hat. In diesem Fall wird erst dann eine Materialverbindung zwischen dem Boden 21 und dem Gehäuse 20 vorgesehen.

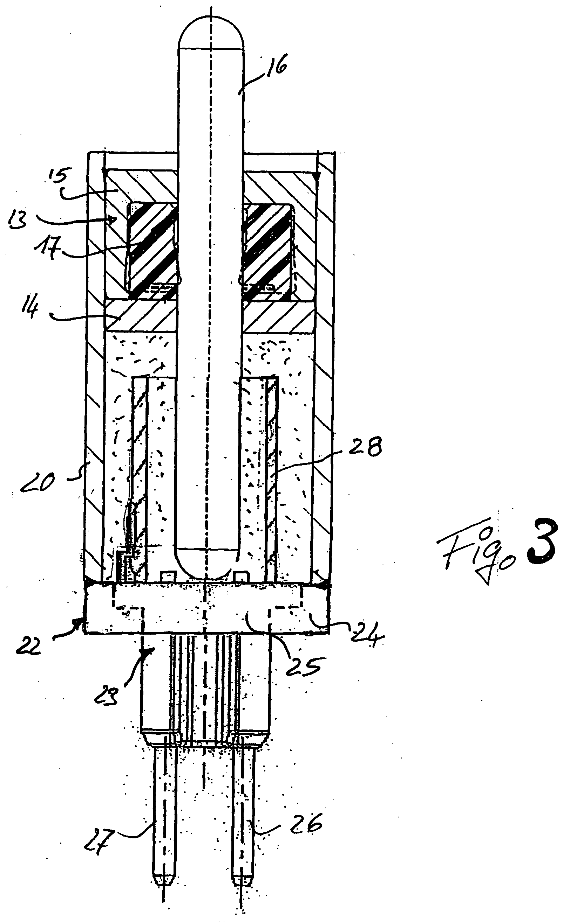

Die Ausführungsform nach Fig. 3 entspricht weitgehend der Ausführungsform nach Fig. 2, d.h. es ist in ein Gehäuse 20 aus einem Rohrstück ein Führungsteil 13 mittels einer Laserschweißnaht gesichert. Der Boden 22 ist auf den offenen Rand des Gehäuses 20 aufgesetzt und mittels einer durch Laserschweißen, Reibschweißen oder Induktionslöten oder eine ähnliche Materialverbindung befestigt. In den Boden 22 ist eine elektrische Heizeinrichtung 23 integriert. Der Boden 22 besitzt einen Stahlring 24, insbesondere einen Edelstahlring, der mit dem Gehäuse 20 verbunden ist, insbesondere verschweißt ist. Der Ring 24 nimmt einen Einsatz 25 auf, aus welchem nach außen elektrische Anschlusskontakte 26, 27 herausragen. Innen ist ein Heizelement 28 vorgesehen, das in den Dehnstoff hineinragt und an das die elektrischen Kontakte 26, 27 angeschlossen sind. Auch bei dieser Ausführungsform kann ein Kalibrieren in der Weise durchgeführt werden, das zunächst der Boden 22 an dem Gehäuse 20 angebracht wird, das Gehäuse mit dem Dehnstoff befüllt und das Führungsteil 13 eingesetzt wird. Anschließend wird das Heizelement 28 bestromt. Danach wird das Führungselement 13 soweit in das Gehäuse 20 hineingedrückt, bis der Arbeitskolben 16 die Position erreicht hat, auf die er kalibriert werden soll. Die Stellung des Führungselementes 13 wird dann durch die umlaufende Laserschweißnaht zwischen dem Teil 15 und dem Gehäuse 13 gesichert und abgedichtet.

## Patentansprüche

1. Verfahren zum Herstellen eines thermostatischen Arbeitselementes, das ein Gehäuse aufweist, in welches ein Dehnstoff eingefüllt wird und dessen offene Seite mit einem Führungsteil verschlossen wird, das eine Führungsbohrung für einen in das Gehäuse eintauchenden Arbeitskolben aufweist, **dadurch gekennzeichnet, dass** das Gehäuse (10, 20) mit dem Führungsteil (13) mittels Laserschweißen mit einer umlaufenden Schweißnaht dichtend verschweißt wird.

2. Verfahren nach Anspruch 1, **dadurch gekennzeichnet, dass** das Gehäuse (20) aus einem Rohrstück gefertigt wird, dessen dem Führungsteil (13) gegenüberliegendes Ende mit einem Boden mittels einer Materialverbindung zwischen Rohrstück und Boden dichtend verschlossen wird.

3. Verfahren nach Anspruch 1 oder 2, **dadurch gekennzeichnet, dass** das Gehäuse (10, 20), nachdem es mit Dehnstoff befüllt und mit dem Führungsteil (13) und dem Arbeitskolben (16) versehen worden ist, einem Medium mit einer erhöhten Temperatur ausgesetzt wird, bei welcher der Arbeitskolben (16) eine vorgegebene Position einnehmen soll, dass dann das Führungsteil (13) so tief in das Gehäuse (10, 20) eingedrückt wird, dass der Arbeitskolben (16) die vorgegebene Position erreicht und dass in dieser Stellung des Führungsteils die Materialverbindung zwischen Gehäuse (10, 20) und Führungsteil (13) hergestellt wird.

4. Thermostatisches Arbeitselement mit einem Dehnstoff enthaltenen Gehäuse (10, 20), dessen offene Seite mit einem Führungsteil (13) verschlossen ist, das eine Führungsbohrung für einen in das Gehäuse eintauchenden Arbeitskolben (16) aufweist, **dadurch gekennzeichnet, dass** das Gehäuse (10, 20) und das Führungsteil (13) mittels einer umlaufenden Laserschweißnaht dichtend verbunden sind.

5. Arbeitselement nach Anspruch 4, **dadurch gekennzeichnet, dass** das Gehäuse (20) ein Rohrstück ist, dessen dem Führungsteil (13) gegenüber liegendes Ende mit einem Boden (21) verschlossen ist, wobei zwischen dem Boden und dem Rohrstück eine Materialverbindung vorgesehen ist.

6. Arbeitselement nach Anspruch 4 oder 5, **dadurch gekennzeichnet, dass** in den Boden (22) eine elektrische Heizeinrichtung (23) integriert ist.

7. Arbeitselement nach einem der Ansprüche 4 bis 6, **dadurch gekennzeichnet, dass** der Boden (21, 22) mit dem Rohrstück (20) verschweißt ist.

8. Arbeitselement nach einem der Ansprüche 4 bis 6, **dadurch gekennzeichnet, dass** der Boden (21, 22) mit dem Rohrstück (20) mittels einer Induktionslötverbindung verbunden ist.

9. Arbeitselement nach einem der Ansprüche 4 bis 8, **dadurch gekennzeichnet, dass** das Gehäuse (20) eine durchgehend zylindrische Außenkontur besitzt.

10. Arbeitselement nach einem der Ansprüche 4 bis 8, **dadurch gekennzeichnet, dass** das Gehäuse (10) eine Außenkontur mit einer Ringschulter (11) besitzt.

## Claims

1. A method for producing a thermostatic working element having a housing into which an expansion material is filled and whose open side is closed with a guide element having a guide bore for a working piston diving into the housing, **characterised in that** the housing (10, 20) is welded to the guide element (13) in a sealing manner by means of laser welding with a circumferential welding seam.

2. The method according to claim 1, **characterised in that** the housing (20) is made from one tube piece whose end opposite the guide element (13) is closed with a base in a sealing manner by means of a material connection between the tube piece and the base.

3. The method according to claim 1 or 2, **characterised in that** the housing (10, 20), after having been filled with expansion material and provided with the guide element (13) and the working piston (16), is subjected to a medium with an increased temperature at which the working piston (16) shall adopt a predefined position such that the guide element (13) is then pressed into the housing (10, 20) so deep that the working piston (16) reaches the predefined position and that the material connection between the housing (10, 20) and the guide element (13) is established in this position of the guide element.

4. A thermostatic working element with a housing (10, 20) containing expansion material, whose open side is closed with a guide element (13) having a guide bore for a working piston (16) diving into the housing, **characterised in that** the housing (10, 20) and the guide element (13) are connected in a sealing manner by means of a circumferential laser welding seam.

5. The working element according to claim 4, **characterised in that** the housing (20) is a tube piece whose end opposite the guide element (13) is closed with a base (21), wherein a material connection is provided between the base and the tube piece.

6. The working element according to claim 4 or 5, **characterised in that** an electric heating device (23) is integrated into the base (22).

7. The working element according to one of claims 4 to 6, **characterised in that** the base (21, 22) is welded to the tube piece (20).

8. The working element according to one of claims 4 to 6, **characterised in that** the base (21, 22) is connected to the tube piece (20) by means of an induction brazing connection.

9. The working element according to one of claims 4 to 8, **characterised in that** the housing (20) has a continuous cylindrical outer contour.

10. The working element according to one of claims 4 to 8, **characterised in that** the housing (10) has an outer contour with a ring shoulder (11).

## Revendications

1. Procédé de fabrication d'un élément de travail thermostatique qui présente un boîtier qui est rempli d'une matière extensible et dont le côté dudit boîtier est obturé par une pièce de guidage qui présente un alésage de guidage pour un piston de travail plongeant dans le boîtier, **caractérisé en ce que** le boîtier (10, 20) est soudé, par soudage au laser, avec la pièce de guidage (13), ledit soudage étant rendu étanche par un cordon de soudure périphérique.

2. Procédé selon la revendication 1, **caractérisé en ce que** le boîtier (20) est fabriqué à partir d'une pièce tubulaire dont l'extrémité opposée à la pièce de guidage (13) est obturée par un fond, de façon étanche, au moyen d'un assemblage de matière réalisé entre la pièce tubulaire et le fond.

3. Procédé selon la revendication 1 ou 2, **caractérisé en ce que** le boîtier (10, 20), une fois qu'il a été rempli de matière extensible et doté de la pièce de guidage (13) et du piston de travail (16), est soumis à un milieu ayant une température élevée sous l'effet de laquelle le piston de travail (16) doit prendre une position prédéfinie, de sorte que la pièce de guidage (13) est enfoncée dans le boîtier (10, 20) suivant une profondeur telle, que le piston de travail (16) atteint la position prédéfinie, et **en ce que**, dans cette position de la pièce de guidage, l'assemblage de matière est réalisé entre le boîtier (10, 20) et la pièce de guidage (13).

4. Elément de travail thermostatique comprenant un boîtier (10, 20) contenant une matière extensible, boîtier dont le côté ouvert est obturé par une pièce de guidage (13) qui présente un alésage de guidage pour un piston de travail (16) plongeant dans le boîtier, **caractérisé en ce que** le boîtier (10, 20) et la pièce de guidage (13) sont assemblés de façon étanche, au moyen d'un cordon de soudure laser périphérique.

5. Elément de travail selon la revendication 4, **caractérisé en ce que** le boîtier (20) est une pièce tubulaire dont l'extrémité opposée à la pièce de guidage (13) est obturée par un fond (21), où il est prévu un assemblage de matière entre le fond et la pièce tubulaire.

6. Elément de travail selon la revendication 4 ou 5, **caractérisé en ce qu'**un dispositif de chauffage électrique (23) est intégré dans le fond (22).

7. Elément de travail selon l'une quelconque des revendications 4 à 6, **caractérisé en ce que** le fond (21, 22) est soudé avec la pièce tubulaire (20).

8. Elément de travail selon l'une quelconque des revendications 4 à 6, **caractérisé en ce que** le fond (21, 22) est assemblé avec la pièce tubulaire (20), au moyen d'un assemblage réalisé par brasage par induction.

9. Elément de travail selon l'une quelconque des revendications 4 à 8, **caractérisé en ce que** le boîtier (20) a un contour extérieur cylindrique continu.

10. Elément de travail selon l'une quelconque des revendications 4 à 8, **caractérisé en ce que** le boîtier (10) a un contour extérieur comprenant un épaulement annulaire (11).
